(19) Europäisches Patentamt / European Patent Office / Office européen des brevets

(11) **EP 3 839 884 A1**

(12) **EUROPEAN PATENT APPLICATION**

(43) Date of publication:
**23.06.2021 Bulletin 2021/25**

(51) Int Cl.:
*G06T 7/00* (2017.01)          *G06T 5/00* (2006.01)

(21) Application number: **19383170.8**

(22) Date of filing: **20.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Fundación Tecnalia Research & Innovation**
**48160 Derio - Bizkaia (ES)**

(72) Inventors:
• **Picon Ruiz, Artzai**
  **48160 Derio - Bizkaia (ES)**
• **Medela Ayarzaguena, Alfonso**
  **48160 Derio - Bizkaia (ES)**
• **Lopez Saratxaga, Cristina**
  **48160 Derio - Bizkaia (ES)**
• **Terradillos Fernandez, Elena**
  **48160 Derio - Bizkaia (ES)**
• **Cicchi, Riccardo**
  **50019 Sesto Fiorentino (IT)**

(74) Representative: **Balder IP Law, S.L.**
**Paseo de la Castellana 93**
**5ª planta**
**28046 Madrid (ES)**

(54) **METHOD, SYSTEM AND COMPUTER PROGRAM PRODUCT FOR IMAGE TRANSFORMATION**

(57)   A computer-implemented method for transforming an image, comprising: applying a format conversion and normalization block (921) to a degraded microscopy image of a first domain (910), thus providing a formatted, normalized degraded image of the first domain (922). The degraded microscopy image has been acquired with an acquisition device selected from: a confocal device, an auto-fluorescence device, a Multi-Photon Tomography device, an Optical Coherence Tomography device, a microscopy device and a Raman device; applying a reconstruction module (925) to the formatted, normalized degraded image of the first domain (922), thus providing a reconstructed image of the first domain (927). The reconstruction module (925) comprises an encoder and a decoder implemented with a semantic regression network; applying a virtual staining module (930) to the reconstructed image. The reconstructed image of the first domain (927) is transformed into a Hematoxilin-Eosin (H-E) histopathological image (940). The virtual staining module (930) comprises an encoder and a decoder implemented with a semantic regression network. The virtual staining module (930) has been trained with a cycle semantic regression network in which every input image in the source domain (10) belonging to a training dataset is transformed (11, 11') into a H-E histopathological image (12) and every obtained H-E histopathological image (12) is transformed back (13, 13') into an image in the source domain (14), thus enforcing both an inverse transformation between the source domain and the H-E histopathological domain and a direct transformation between the source domain and the H-E histopathological domain.

FIG. 9

**Description**

**TECHNICAL FIELD**

The present invention relates to the field of image transformation. In particular, it relates to methods and systems for transforming images, such as images in novel image domains into images of a well-known image modality. Images to be transformed may be degraded images, low quality images and/or images that cannot be interpreted by target users.

**STATE OF THE ART**

In the medical domain, white light endoscopy is the current procedure for the in-vivo assessment in the gastrointestinal tract. This method often requires ex-vivo histological analysis for assessing clinical diagnostics, assuring resection level and measuring the lesion infiltration level. Besides this, the lack of precise quantitative parameters for evaluation provokes significant intra-observer and inter-observer variability.

During the last decades, there has been an increasing interest in developing optical methods to visualize and evaluate histological level parameters on living real tissue. Optical Coherence Tomography methods, Confocal Microendoscopy, Light Scattering Spectroscopy, Raman Spectroscopy, Multi Photon Tomography, among others, have been analyzed. Although promising, all of these methodologies face similar issues and barriers for their entrance into real clinical practice: They present a strong entrance barrier in the clinical community as clinicians cannot interpret the images provided by these modalities; there is a necessity of generating inference models that provide the clinicians with statistical assessment of the lesions; clinicians demand a procedure of comparing the assessment with known imaging modalities. The difficulty in interpreting the obtained images contributes to the fact that the incorporation of such optical techniques has not taken place massively.

This kind of barriers hinders the development and establishment of new imaging modalities for optical biopsying and/or diagnosis. One of the difficulties present in the generation of an appropriate inference model is the necessity of large labeled and highly variate datasets of the targeted imaging modality. Even if such inference model was developed, it would represent a black-boxed algorithm in which professionals, such as doctors, clinicians and engineers, could not verify its assessment due to the complexity and novelty on the image interpretation.

There exists certain work on image domain adaptation in the medical field. In this sense, the generalization of Convolutional Neural Networks has revolutionized the field of biomedical imaging analysis, see for example Geert Litjens et al., "A survey on deep learning in medical image analysis", Medical image analysis, vol. 42, pp.60-88, demonstrating diagnostic accuracy at expert level. Although deep learning methods are capable of obtaining unprecedented performance not affordable by classical machine learning algorithms, they normally require several thousands of well-labeled images to generate robust methods with the appropriate generalization capabilities. For example, US9589374B1 discloses a diagnosis system for medical images using deep convolutional neural networks. However, this system is based on radiology images, which pertain to a well-known imaging modality and do therefore not entail the barriers of other image evaluation techniques. Besides, extensive radiology image datasets are available at hospitals.

Unfortunately, regarding the mentioned methodologies requiring an effort of image interpretation, only small datasets are usually obtained at clinical settings. Creating large and well annotated datasets is time consuming and might not be feasible for early clinical studies, for rare diseases or for new imaging modalities. This problem is also harmfully present when working with new diagnosis imaging modalities (e.g. Optical Coherence Tomography, Multi Photon Tomography, Raman Spectroscopy, Reflectance Confocal Microscopy, etc.), in which the required number of well-annotated images for designing and validating a disease diagnosis algorithm requires scheduling large clinical trials. Furthermore, annotating and interpreting these images acquired with novel techniques is more challenging for histopathologists, since they do not have experience with those images, unlike with H-E images.

In order to tackle this problem, alternative approaches have been proposed. For example, Domain transfer techniques aim to leverage the existing labels of a different task or domain, while Domain adaptation aims to map the statistical distribution of the pixel intensity of the images among the different domains of interest either at pixel level or at representation level, or at few shot learning methods that aim to learn with few samples, as reported for example by Alfonso Medela and Artzai Picón in "Constellation loss: Improving the efficiency of deep metric learning loss functions for optical embedding", 2019.

Traditionally, domain transfer techniques have been applied by training a convolutional neural network that minimizes a mean squared error loss function between target and source domains, see for example Deepak Pathak et. al, "Context encoders: Feature learning by inpainting", Proceedings of the IEEE conference on computer vision and pattern recognition, 2016, pp. 2536-2544 or Richard Zhang et. al, "Colorful image colorization", European conference on computer vision, Springer, 2016, pp. 649-666. However, the use of this loss function leads to blurred images.

More advanced approaches use generative adversarial networks, as reported for example by Philip Isola et. al, "Image-to-image translation with conditional adversarial networks", Proceedings of the IEEE conference on computer vision and pattern recognition, 2017, pp. 1125-1134, in co-registered inter-domain images to translate the image among two domains, making impossible for a discriminator network to distinguish between the mapped image and the original one in the target domain. However, generative adversarial networks incorporate a perceptual factor that is in opposition to the similarity factor (see for example Yochai Blau et. al, "The perception-distortion tradeoff", Proceedings of the IEEE Conference on Computer Vision and Pattern Recognition, 2018, pp. 6228-6237) and thus, tends to generate less similar but more plausible images.

Still more advanced networks, such as cycle GANs (see for example Jun-Yan Xhu et. al, "Unpaired image-to-image translation with conditional adversarial networks", Proceedings of the IEEE international conference on Computer Vision, 2017, pp. 2223-2232) allow domain mapping with no need of pixel correlation among domains. However, all reconstruction methods suffer from the perception-distortion trade-off problem. These networks prioritize the generation of perceptually realistic images by penalizing fulfilling the similarity loss which minimizes the level of distortion of the reconstructed image. This makes the generated images look perceptually realistic and plausible. However, they can reflect a disease condition different to the original real sample.

Therefore, there is a need to develop an improved method for image transformation using Domain transfer techniques.

## DESCRIPTION OF THE INVENTION

The computer-implemented method and system for image transformation described in the present invention intends to solve the shortcomings of prior-art methods and systems therefor.

The method of the present invention transforms an image from a first image domain (a source domain $D_s$ of an image modality) into a second image domain (a target domain $D_t$ of an image modality), through virtual staining. The method therefore uses Domain transfer techniques. The first image domains may be candidates, for example, for in-vivo optical biopsy, or for ex-vivo optical biopsy, or in general for medical diagnostics. The first image modalities (domains) used as source domain $D_s$ may be taken during in-vivo optical biopsy, or during ex-vivo optical biopsy, or during a medical diagnostics procedure. Images in the source domain $D_s$ are microscopy images, either of high or low resolution. Microscopy images provide structural and/or functional information of a tissue. Images in the source domain may have been captured with an acquisition device, such as a confocal device, an auto-fluorescence device, a Multi-Photon Tomography (MPT) device, an Optical Coherence Tomography (OCT) device, a microscopy device or a Raman device. As a matter of example, MPT devices highlight collagen, while Raman devices highlight sugars. The acquisition device may comprise an optical fiber or an optical probe which moves following a predefined pattern. Non-limiting examples of predefined patterns are helix-shaped, lissajous-shaped, or others. Therefore, images in the source domain may be, for example, multi-photon tomography images, such as lissajous scanning probe acquired multi-photon tomography images $D_{s\text{-afp}}$ or auto-fluorescence microscopy images $D_{s\text{-afm}}$. The target domain into which the image in the first domain is transformed is preferably Hematoxilin-Eosin (H-E) histopathological microscopy image domain $D_{t\text{-he}}$.

Images in certain source domains, such as the multi-photon tomography domain $D_{s\text{-afp}}$, may need reconstruction due for instance to the degradation caused during the acquisition process. In this sense, the proposed method can transform an image from a first image domain into a second image domain through virtual reconstruction. In other words, the proposed method can be used for virtually reconstruction of a degraded microscopy image. This applies to degraded images or low quality images, for example due to the acquisition stage. A degraded image can be reconstructed from a well-known pattern of the acquisition device, that is to say, from a reconstruction grid pattern or reconstruction grid image. Non-limiting well-known reconstruction grid patterns may be lissajous patterns or square grid patterns.

In sum, degraded source images may first be virtually reconstructed and second virtually stained to obtain appropriate H-E images. Virtually stained images can serve as visual optical biopsy reports on the already known H-E domain, which can be further studied by clinicians.

The proposed transformation method is based on semantic regression networks, ensuring that the transformed image is similar to the original one, not only at pixel level, but also at an image embedding description level. In the context of the present invention, image embedding refers to a set of techniques used for reducing the dimensionality of input data processed by general neural networks (NN), including deep NNs. Thus, the proposed method drastically reduces the perception distortion trade-off problem existing in domain transfer based on conventional techniques, such as generative adversarial networks. Semantic regression networks may be used both for virtual staining images and for reconstruction of degraded images. Non-limiting examples of semantic regression networks that may be used are fully convolutional densenet and u-net.

Semantic regression networks must be trained with a dataset of real images, on source and target domains. In particular, the semantic regression networks used for virtual staining of images can be trained for example with a multi-photon or autofluorescence acquired microscopy image that is latterly chemically stained and scanned with an H-E microscope. Each pair of source and target domain images are shown to the network during the training process and a loss function that measures the similarity among the estimated target domain image and the real target domain image (ground-truth) is evaluated.

Once the semantic regression networks have been trained, a newly captured image can be reconstructed (if required, when the acquisition means causes degradation) and then virtually stained, by applying the already trained semantic regression networks. Besides, the visually stained image can be identified / recognized by using classification networks working over HE images (stained images), since extensive datasets of H-E, already classified and annotated, for example as healthy or tumoral, exist. Tumoral images have also been subclassified according to various types of tumour and in different grades.

The present invention also refers to a computer-implemented method for image classification, which takes advantage of the method for image transformation.

An uncertainty margin concept may also be incorporated in the proposed method. The uncertainty margin concept allows the network to measure its own confidence and demonstrate that the virtually stained -and optionally reconstructed- images can be used on already existing classification models on the target domain. For example, balanced accuracies of 0.95 and negative predictive values of 1.00 may be obtained. This is of great importance since the need for extensive and labeled datasets on the source domain, which may be non-affordable, can be eradicated.

A first aspect of the invention relates to a computer-implemented method for transforming an image, comprising: applying a format conversion and normalization block to a degraded microscopy image of a first domain, thus providing a formatted, normalized degraded image of the first domain, wherein the degraded microscopy image of the first domain has been acquired with an acquisition device selected from the following group of acquisition devices: a confocal device, an auto-fluorescence device, a Multi-Photon Tomography device, an Optical Coherence Tomography device, a microscopy device and a Raman device; applying a reconstruction module to the formatted, normalized degraded image of the first domain, thus providing a reconstructed image of the first domain, wherein the reconstruction module comprises an encoder implemented with a first semantic regression network and a decoder implemented with a second semantic regression network; applying a virtual staining module to the reconstructed image of the first domain, wherein the reconstructed image of the first domain is transformed into a Hematoxilin-Eosin histopathological image, wherein the virtual staining module comprises an encoder implemented with a first semantic regression network and a decoder implemented with a second semantic regression network; wherein the virtual staining module has been trained with a cycle semantic regression network in which each input image in the source domain belonging to a training dataset is transformed into a Hematoxilin-Eosin histopathological image and each obtained Hematoxilin-Eosin histopathological image is transformed back into an image in the source domain, thus enforcing both an inverse transformation between the source domain and the Hematoxilin-Eosin histopathological domain and a direct transformation between the source domain and the Hematoxilin-Eosin histopathological domain.

In embodiments of the invention, the virtual staining module has been additionally trained with an inverted cycle semantic regression network in which simultaneously to the transformation of an input image in the source domain into a Hematoxilin-Eosin histopathological image, a Hematoxilin-Eosin histopathological image is transformed into an image in the source domain, and simultaneously to the transformation of the Hematoxilin-Eosin histopathological image back into an image in the source domain, the image in the source domain is transformed into a Hematoxilin-Eosin histopathological image.

In embodiments of the invention, the degraded microscopy image is a multi-photon tomography image or an auto-fluorescence microscopy image.

In embodiments of the invention, the semantic regression network with which the virtual staining module has been trained, further comprises a classification network trained over a set of H-E histopathological images, the classification network providing a vector extracted from said H-E histopathological images, said vector representing image embeddings, such that the difference between image embeddings of original and transformed images is taken into account.

In embodiments of the invention, the method further comprises applying a classification module to the H-E histopathological image, wherein the H-E histopathological image is classified as pathogen or non-pathogen, wherein the classification module is implemented with a residual neural network which has been trained over a training set from a H-E dataset. In this case, the last layer in the residual neural network is preferably substituted by a 2-channel convolution with softmax activation. Prior to applying the classification module, an augmentation module performing test-time augmentation may be applied to the H-E histopathological image.

In embodiments of the invention, the reconstruction module has been trained with a cycle semantic regression network in which each input degraded image in the source domain belonging to a training dataset is transformed into a reconstructed image and each obtained reconstructed image is transformed back into a degraded image in the source domain, thus enforcing both an inverse transformation between the degraded source domain and the reconstructed domain and a direct transformation between the degraded source domain and the reconstructed domain. In certain embodiments, the reconstruction module has been additionally trained with an inverted cycle semantic regression network in which simultaneously to the transformation of an input degraded image into a reconstructed image, a reconstructed image is transformed into a degraded image, and simultaneously to the transformation of the reconstructed image back into a degraded image in the source domain, the degraded image is transformed into a reconstructed image.

A second aspect of the invention relates to a device comprising processing means configured for receiving a degraded microscopy image of a first domain and performing the method already disclosed.

A third aspect of the invention relates to a system comprising an acquisition device and the device already disclosed, wherein the acquisition device is one of the following group: a confocal device, an auto-fluorescence device, a Multi-Photon Tomography device, an Optical Coherence Tomography device, a microscopy device and a Raman device.

A fourth aspect of the invention relates to an acquisition device comprising the device already disclosed, wherein the acquisition device is one of the following group: a confocal device, an auto-fluorescence device, a Multi-Photon Tomography device, an Optical Coherence Tomography device, a microscopy device and a Raman device.

A fifth aspect of the invention relates to a computer program product comprising computer program instructions/code for performing the method of the first aspect of the invention.

A sixth aspect of the invention relates to a computer-readable memory/medium that stores program instructions/code for performing the method of the first aspect of the invention.

Some of the benefits of the proposed method and system are: (1) The virtually stained images serve as virtual H-E biopsy visual report, as they can be used by clinicians for the verification of the assessment on an already established domain. (2) The proposed cross-domain image translation eliminates the need for a large, variate and annotated dataset on the source domain to generate an inference model, because optical biopsy can be performed over target domain models. For example, it has been proved that the cross-modal translated images (reconstructed and virtually stained) can be used with existing H-E cancer classification models. Therefore, the proposed method and system take benefit of all images and datasets already existing in the H-E microscopy domain, avoiding the need of unavailable and extensive annotated datasets on the source domain.

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

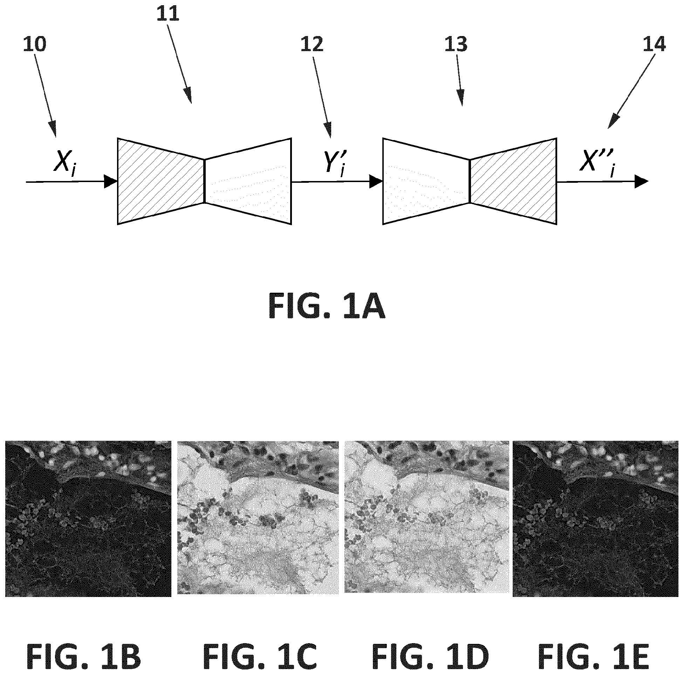

Figure 1A shows a cycle network according to an embodiment of the present invention, which permits training a virtual staining module. The cycle network comprises two semantic regression networks, for transforming an image in a first domain into an image in a second domain and the image in the second domain into the original image in the first domain, according to an embodiment of the invention. After training, a trained code piece is prepared for staining new images in the first domain. Figures 1B-1E show examples of images used and/or obtained in the cycle network of Figure 1A.

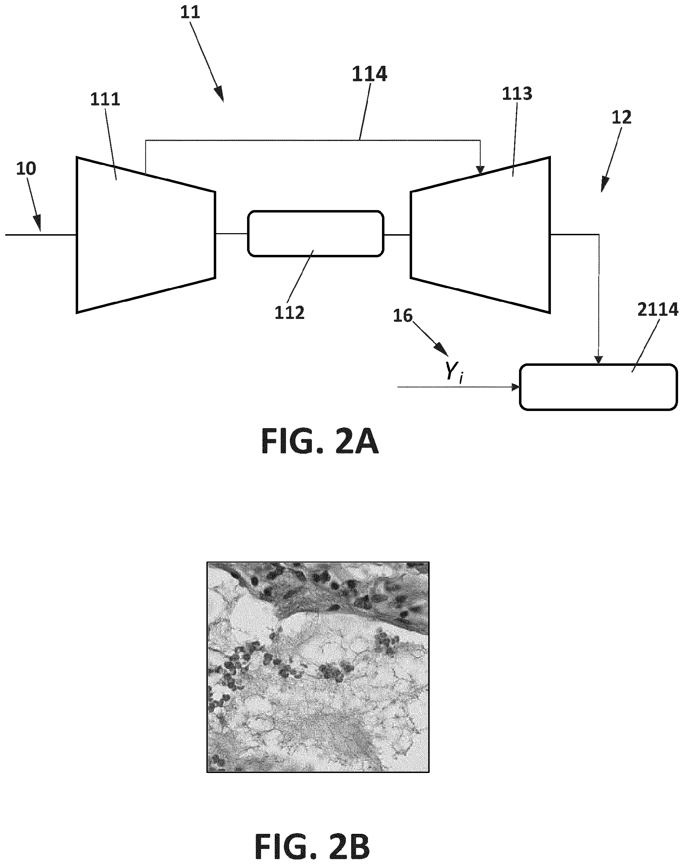

Figure 2A shows a possible architecture of a semantic regression network of Figure 1A. Figure 2B shows an example of H-E image used to train the semantic regression network.

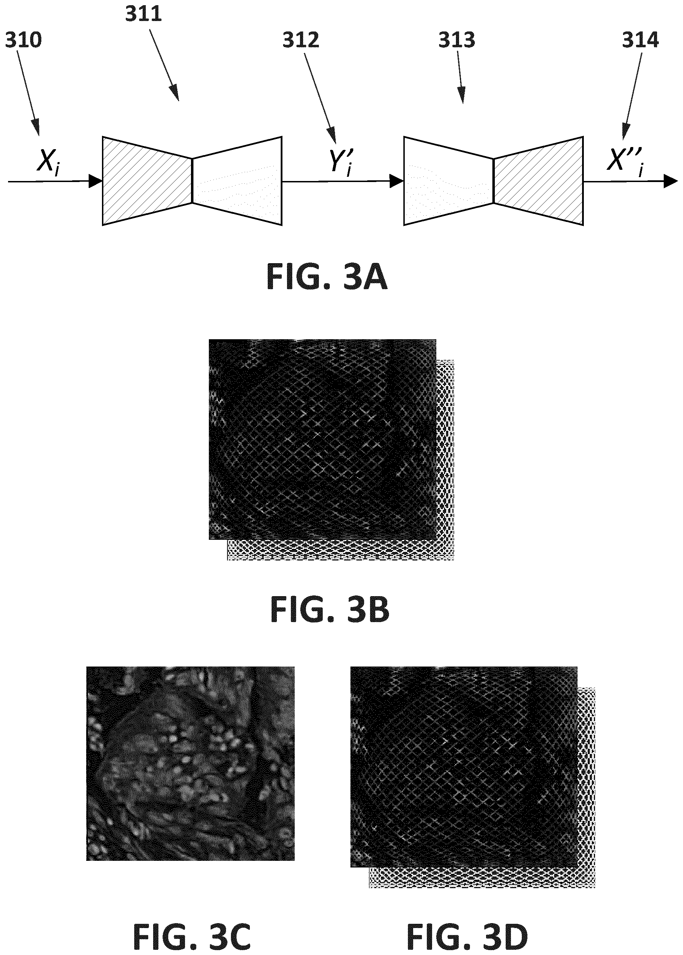

Figure 3A shows a cycle network similar to the one shown in Figure 1A, in this case for training a reconstruction module. After training, a trained code piece is prepared for reconstructing new degraded images. Figure 3B-3D show examples of images used and/or obtained in the cycle network of Figure 3A.

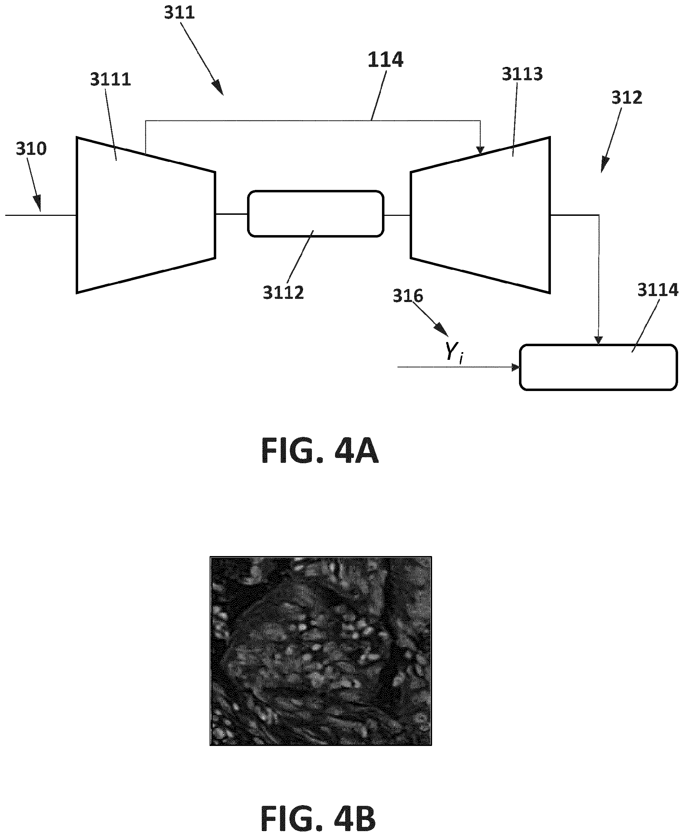

Figure 4A shows a possible architecture of a semantic regression network of Figure 3A. Figure 4B shows an example of annotated input image.

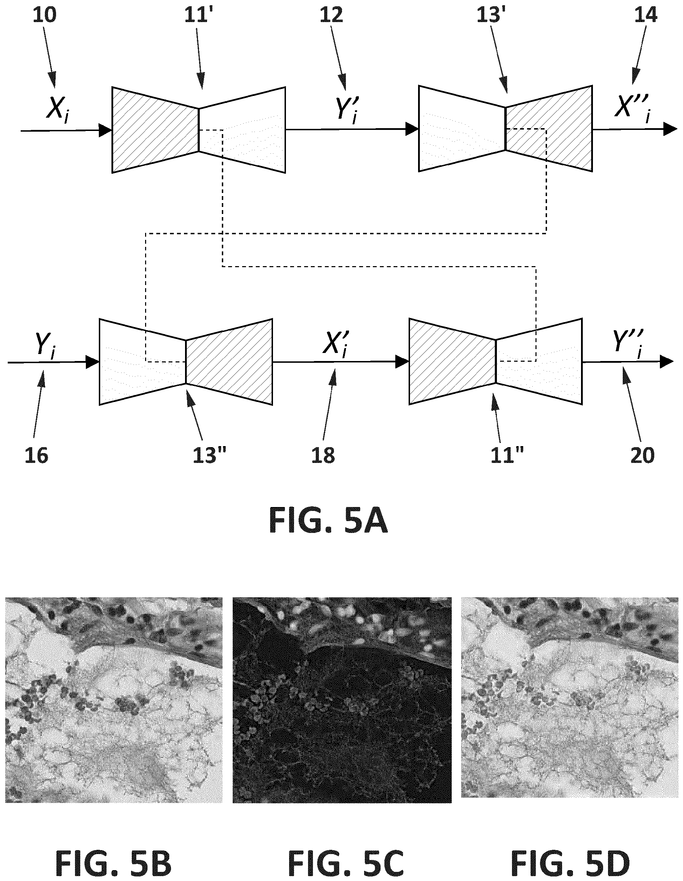

Figure 5A shows a cycle network for training a virtual staining module, according to an alternative embodiment of the invention. After training, a trained code piece is prepared for staining new images in the first domain. Figures 5B-5D show examples of images used and/or obtained in the symmetric cycle network of Figure 5A.

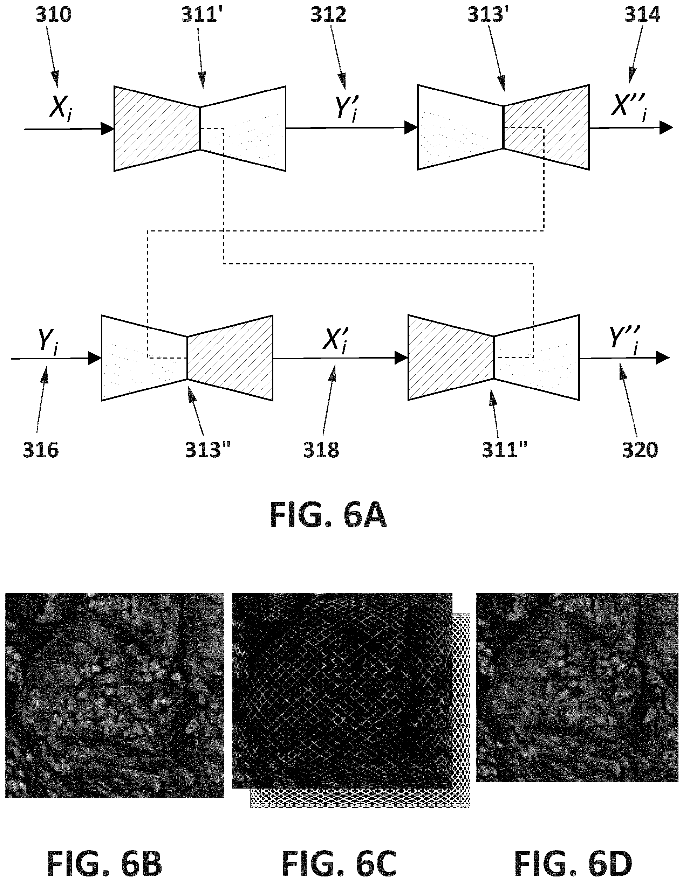

Figure 6A shows a cycle network similar to the one shown in Figure 5A, in this case for training a reconstruction module, according to an alternative embodiment of the invention. After training, a trained code piece is prepared for reconstructing new degraded images. Figures 6B-6D show examples of images used and/or obtained in the symmetric cycle network of Figure 6A.

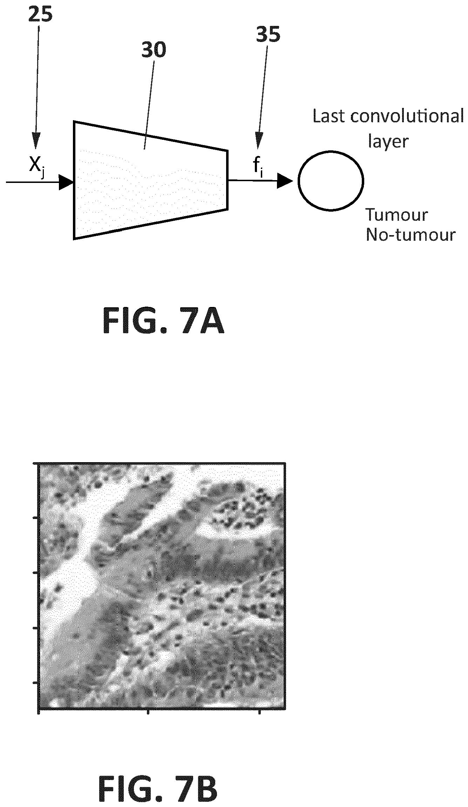

Figure 7A shows a classification network trained with a dataset of H-E images for extracting high-level features of the images. For training the network, pairs of images and their corresponding class (tumour/not tumour) are provided to the network. Figure 7B shows an example of image used to make a prediction with the classification network of Figure 7A.

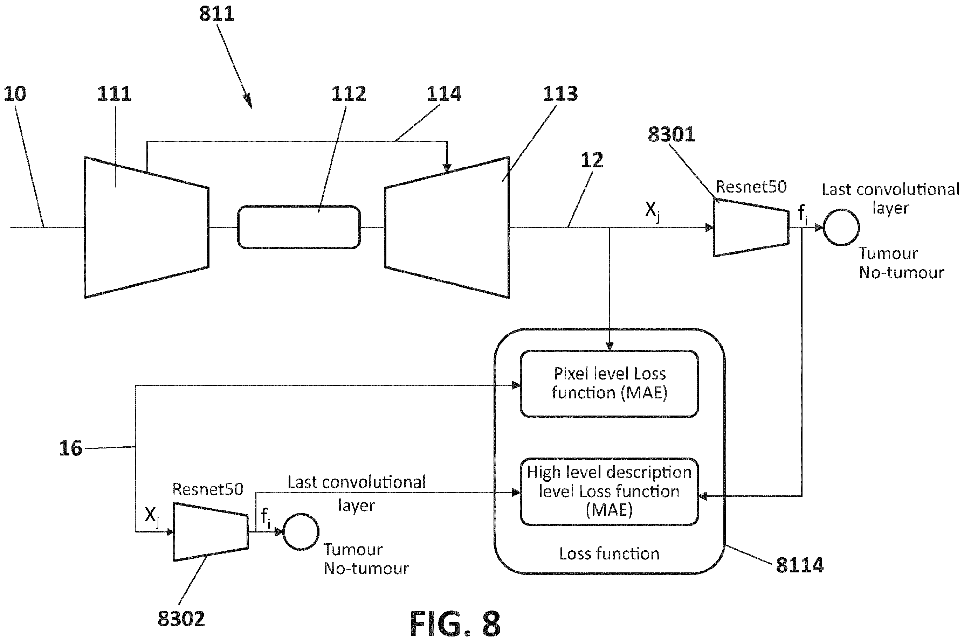

Figure 8 shows an enhanced architecture for a semantic regression network, including a loss function which takes into account high-level image features, according to an embodiment of the invention.

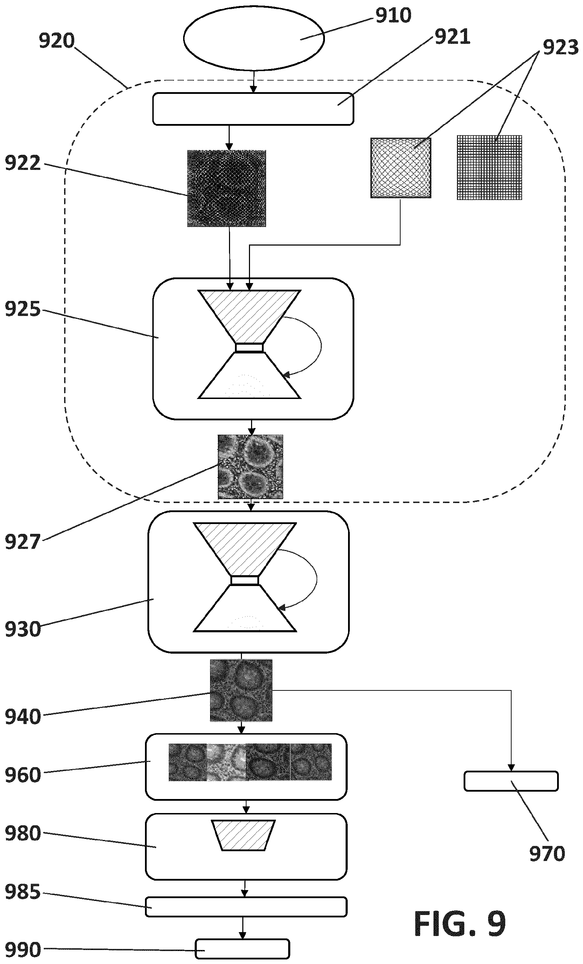

Figure 9 shows a block diagram of a method for transforming images of a first domain into images of a second domain, according to an embodiment of the invention. The images of the second domain are virtually stained. The first domain images may have been previously reconstructed. The virtually stained images may be used for personal diagnosis or for automatic (computer) diagnosis.

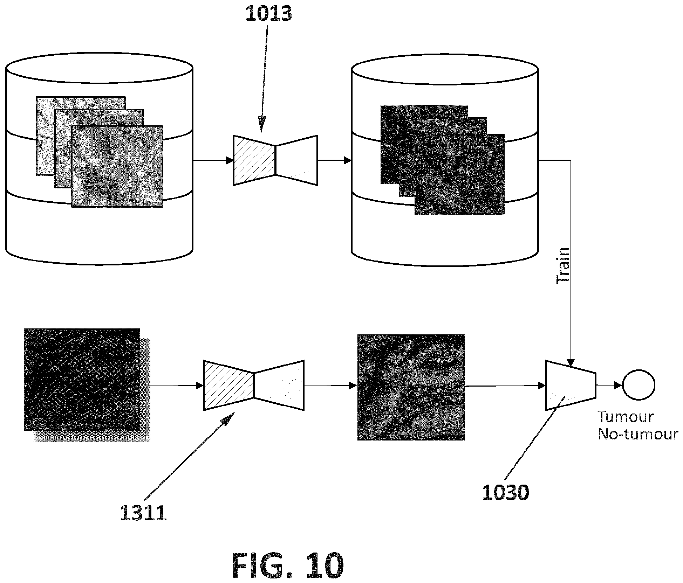

Figure 10 shows an additional embodiment of the invention, in which the higher dimensionality images (for example, H-E images) are virtually de-stained from a corresponding dataset.

## DESCRIPTION OF A WAY OF CARRYING OUT THE INVENTION

In Figures 1A-6D, different ways of training domain transform networks in order to enhance their learning capabilities for later used during in-vivo optical biopsy, ex-vivo optical biopsy, or medical diagnostics procedures in general, are shown. The main assumption is that subsequent transformations from different domains reduce the effect of small errors during simple transformations.

Figure 1A shows a cycle network for training a virtual staining module according to an embodiment of the invention. After training, a trained code piece is prepared for staining new images in the first domain, for example in a module 930 as represented in Figure 9. The cycle network comprises two semantic regression networks 11, 13. In first semantic regression network 11, an image $X_i$ 10 in a first image domain is transformed into a second image domain $Y'_i$ 12 through virtual staining. Input image $X_i$ 10 is a microscopy image having MxNxk dimensions, wherein MxN is the resolution in pixels and k is the number of channels. As a matter of example, k=1 in a B&W (black and white) image and k=3 in a color image (RGB image). k may take other values, such as, for example, k=16 in a multispectral image or, for example, K=1000 in an image captured with a Raman device. Input image $X_i$ 10 is preferably a multi-photon tomography image $D_{s-afp}$ or an auto-fluorescence microscopy image $D_{s-afm}$. Clinicians are not familiar with this type of input images. Besides, currently there are not extensive, labeled datasets of these images, with which new captured images should be compared for evaluation and diagnosis. For this reason, image $X_i$ 10 is input into a first semantic regression network 11 in which image $X_i$ 10 is transformed into an output image $Y'_i$ 12, which is a Hematoxilin-Eosin (H-E) histopathological microscopy image $D_{t-he}$. Image $Y'_i$ 12 is obtained by applying a virtual staining process. Image $Y'_i$ 12 is then input into a second semantic regression network 13, in which image $Y'_i$ 12 is transformed back into the original input image $X''_i$ 14. Training is performed with pairs of co-registered images (pairs of images registered in the first and second domains). For example, pairs of images are taken with a multiphoton microscope to capture their autofluorescence signal. Tissues are latterly chemically stained and scanned again with a H-E microscope. Both images are co-registered by using an image registration method based on mutual information, which is out of the scope of the present invention. These co-registered images constitute the training set pairs from both domains required by the algorithm.

Figure 1B shows an example of input image $X_i$ 10. Image $X_i$ 10 is a single channel 448x448x1 autofluorescence image. For example, image 10 has been obtained by scanning a tissue with a OLYMPUS BX-61 binocular microscope. The tissue is excited with a UV light of 350nm of central band. A bandpass filter allows transmission between 400-600 nm. Alternatively, image 10 may be obtained with a multiphoton microscope to capture their autofluorescence signal. Figure 1C shows an image $Y_i$ of the same tissue where the tissue has been chemically stained with hematoxylin and Eosin and scanned again with a HE chemically stained image. Figure 1D shows an example of image $Y'_i$ 12 obtained through a process of virtual staining of input image $X_i$ 10. Images in figures 1B and 1C are co-registered by using an image registration method based on mutual information. These co-registered images constitute the training set pairs from both domains required by the algorithm. Figure 1E shows an example of image $X''_i$ 14, transformed back from image $Y'_i$ 12.

A possible architecture of the semantic regression network 11 for virtual staining is illustrated in Figure 2A. The semantic regression network 11, which is for example a fully convolutional densenet network, comprises a first stage (also referred to as an encoder) 111 and a second stage (also referred to as a decoder) 113. Encoder 111 and decoder 113 are connected through skip connections 114. Input image $X_i$ 10, which is for example a single channel MxNx1 auto-fluorescence microscopy image, is input into encoder 111, implemented in the shown embodiment as a densenet. As a matter of example, M=N=448. Decoder 113 is also implemented as a densenet in the shown embodiment. In the first stage 111, image $X_i$ 10, also referred to as a signal, passes through a subsequent set of convolutional operations and max-pooling, that reduce the spatial dimension of the signal while increasing the descriptive part gradually, until an image descriptor 112 is obtained. Convolutional layers are the responsible for extracting features such as borders, colors and textures which are then used to determine the class. The first convolutional layers extract low-level and mid-level features, features that are usually dots and edges with different orientations. Deeper convolutional layers build high-level features on top of low-level features to detect objects and larger shapes on the image. All these layers have their respective parameters which must be learned in order to perform well for each specific problem, especially last convolutional layers. Fortunately, first convolutional layers can be reused as edges and colors are of common use for any kind of computer vision problem. The second operation, pooling, is used after some convolutional layers in order to reduce dimensionality of the feature maps, and this way, reduce computational burden. Max-pooling is the most commonly used layer over mean and other pooling operators, as it is the one that shows best results. This operation doesn't have any parameter to learn, its only and important tasks is reducing the size of the feature map for later layers while capturing important information of those feature maps.

After passing through all the convolutional and pooling layers that compose the architecture of the network, an image descriptor 12 is obtained as output. Image descriptor 112 may be implemented as a vector of P elements. P may be, for example, 2048. Image descriptor 112 gives an idea of the content of the image at a high level. In a second stage 113, composed of a set of transposed convolutional filters and upsampling layers, the spatial resolution of the input image 10 is recovered on the desired domain. This is done from the image descriptor 112 and from the feature maps obtained at the encoder 111. Usually, some information is captured in in the initial layers and is required for reconstruction during the up-sampling done using the fully connected network layer. Without skip connections 114, this information would have been lost. In order to recover high level information of the input image, network 11 uses skip connections 114 that transfer low level features and spatial information from the source domain into a detailed reconstruction of the target domain. The low-level features are the ones learned by the first convolutional layers and the spatial information is compressed in the descriptor. The descriptor, together with the information from the encoder, allows the encoder to create a correct reconstruction of the high-level features present on the image. At the end of the architecture, a 3-channel layer with sigmoid layer activation performs the final reconstruction of the virtual stained image 12. In other words, image descriptor 12 represents the reconstruction of the virtually stained image. The sigmoid function transforms input values to the range of 0 to 1, as pixel values need to be normalized. In other words, in the second stage 113, the image is reconstructed at pixel level and it is stained.

During the training stage, the reconstructed image is compared with the input image by applying a loss function 2114, for example, a mean absolute error metric (MAE), to all the real and reconstructed pixel values. Mean absolute error is a metric that simply takes the absolute value of the difference between the input and output value of a pixel and averages over the whole image. Although at this point, only pixel-level loss function has been mentioned, of course, low-level features, high-level features and the so-called descriptor have been used for the reconstruction of the output image. k is 3 because the goal is to obtain a stained image. Therefore, the obtained image 12 has dimensions MxNx3. A virtually stained H-E image 12 is obtained. Other loss functions 2114 could be employed instead, such as mean absolute error or r2 metric, among others.

In order to train the semantic regression network 11 of Figure 2A, real images $Y_i$ 16 in the target domain (in this case H-E histopathological microscopy images $D_{t-he}$) are used (see for example Figure 1C). It is remarked that there exist extensive datasets of H-E images. Parameters of the module 11 that describes the neural network are trained to minimize the loss function 2114. In the case of Figure 2A, the loss function 2114 is, for example, the mean average error between the chemically stained image $Y_i$ and the virtually stained image $Y'_i$ as depicted in next equation:

$$\mathcal{L}_{s2t} = \sum_{i=1}^{N} |Y_i - Y'_i|$$

Turning back to Figure 1A, semantic regression network 13, acting as auto-fluorescence estimator, is the same network as network 11, but network 13 takes stained images 12 as inputs and outputs de-stained images (autofluorescence images) 14. Therefore, input and output shapes change, being MxNx3 the input shape and MxNx1 the output shape. However, module 11 can be advantageously trained following other approaches. Thus, the cycle network of Figure 1A performs a double transformation, represented by the first and second semantic regression networks 11, 13. Input image $X_i$ 10 is first transformed into a virtually stained image $Y'_i$ 12 at the first semantic regression network 11, and the virtually stained image $Y'_i$ 12 is transformed into the original input image $X''_i$ 14 at the second semantic regression network 13 acting as an auto-fluorescence estimator. The second semantic regression network 13 takes the input image of dimensions MxNx3 (that is to say, k=3) and transforms it into an image $X''_i$ 14 of a single channel MxNx1. When the network in Figure 1A is trained, it is enforced that any image $X_i$ 10 transformed into its target domain estimation $Y'_i$ 12 can be transformed back into its original source domain $X''_i$ 14. This is enforced by generating a concatenated network (the cycle network in Figure 1A) that first performs the transform between the source image into target domain and after that, the resulting estimation is transformed back into the original domain. In this case, the training is performed by optimizing a combined loss function $\mathcal{L}_{s2t}$ defined by the following equation, ensuring that both the direct and the inverse transforms are defined while implicitly imposing bijectivity properties on the learnt transformations. This equation trains the parameters for the first and second semantic regression networks 11, 13.

$$\mathcal{L}_{s2t} = \sum_{i=1}^{N} |Y_i - Y_i'| + \sum_{i=1}^{N} |X_i - X_i''|$$

By optimizing the first addend in the former equation, the error between the image in the target domain $Y_i$ 16 and the estimated image $Y_i'$ 12 (Fig. 2A) is minimized. This first term (first addend) is related to the H-E virtual staining network 11. By optimizing the second addend in the former equation, the error between the image in the source domain $X_i$ 10 and the estimated image $X_i''$ 14 is minimized. This second term (second addend) is related to the auto-fluorescence network 13. In other words, the learning capabilities of the semantic regression networks are enhanced by imposing the invertibility of the learnt solution.

In Figures 1A and 2A it has been considered that images $X_i$ 10 in the first image domain are not degraded images. In other words, their quality is high enough for transformation. However, in practice, images taken during in-vivo optical biopsy, or during ex-vivo optical biopsy, or in general during a medical diagnostics procedure, may have low resolution or may be degraded. Degradation may be caused by the acquisition device. The cycle network shown in Figures 1A and 2A can also be used for training a reconstruction module (for example module 925 in Figure 9). This is illustrated in Figures 3A and 4A, referring to degraded images, which respectively correspond to Figures 1A and 2A (these ones for the virtual staining case). Image $X_i$ 310 may be a lissajous pattern degraded AF image. Degraded image 310 is input into a first semantic regression network 311 in which degraded image 310 is transformed into a lissajous reconstructed image $Y_i'$ 312. Image $Y_i'$ 312 is obtained by applying a lissajous reconstruction process. Image $Y_i'$ 312 is then input into a second semantic regression network 313, in which image $Y_i'$ 312 is transformed back into the original input image $X_i''$ 314 by applying a lissajous degradation estimation process. Figure 3B shows an example of degraded input image $X_i$ 310. This image is obtained by applying a Lissajous pattern over an AF image. To apply Lissajous pattern means selecting the information where the Lissajous pattern pass, and setting to black the rest of the image. Figure 3C shows an example of image $Y_i'$ 312 obtained through a process of lissajous reconstruction of input image $X_i$ 310. The reconstructed image is the output of the Lissajous reconstructor network 311. Figure 3D shows an example of image $X_i''$ 314, transformed back from image $Y_i'$ 312. This image is the output of the Lissajous degradation estimator network 313.

A possible architecture of the semantic regression network 311 for image reconstruction is illustrated in Figure 4A. In particular, it is a semantic regression network for lissajous reconstruction. This architecture is similar to the one shown in Figure 2A. In Figure 4A, original AF images 316 are used to train the network, that is to say, the network needs to learn how to reconstruct lissajous pattern degraded AF images. Other training images may be used instead. This is achieved by training the network with a collection of annotated original AF images. AF images are the images of the tissue taken by a autofluorescence microscope. Figure 4B shows an example of annotated input image, which in particular represents healthy tissue. Parameters of the module 311 that describes the neural network are trained to minimize the loss function 3114. In the case of figure 4A, the loss function is, for example, the mean average error between a high quality image $Y_i$ 316 and the virtually reconstructed image $Y_i'$ as depicted in next equation:

$$\mathcal{L}_{s2t} = \sum_{i=1}^{N} |Y_i - Y_i'|$$

Figure 5A shows an alternative embodiment of the invention, in which a different way of training a domain transform network is implemented. In this case, a symmetric cycle network for domain translation for virtual staining and virtual de-staining is implemented. Figure 5A can be seen as an enhancement of Figure 1A, because in Figure 5A, in addition to the cycle network of Figure 1A, an inverted cycle network is used. The embodiment of Figure 1A (and Figure 3A, referring to reconstruction of degraded images) enforces bijectivity property for the estimated direct and inverse transforms. However, it focuses only on the direct transform from the source domain into the target domain. In Figure 5A, the importance of both transforms is balanced. This is implemented with a mirrored architecture (first and second semantic regression networks 11', 13' on the one hand; and second and first semantic regression networks 13'', 11'', on the other hand) that simultaneously transforms an image in the source domain $X_i$ 10 into a target domain $Y_i'$ 12 and an image in the target domain $Y_i$ 16 into its source domain counterpart $X_i'$ 18. Both estimated transformations $Y_i'$ 12 and

$X'_i$ 18 are then projected back into their original domain, obtaining $X''_i$ 14 and $Y''_i$ 20, respectively. It is remarked that networks 11' and 11" are the same network, in other words, they have the same weights. They are also the same network as network 11 (Figure 1A). Similarly, networks 13' and 13" are the same network, in other words, they have the same weights. They are also the same network as network 13 (Figure 1A). An example of input image $X_i$ 10 has already been shown in Figure 1B. It is a single channel 448x448x1 autofluorescence image. An example of image $Y'_i$ 12 has already been shown in Figure 1D. It is a virtually stained image. An example of image $X''_i$ 14, transformed back from image $Y'_i$ 12, has already been shown in Figure 1E. Therefore figures 1B-1E are applicable to Figure 5A. Figure 5B shows an example of image $Y_i$ 16. It is a real H-E image. Figure 5C shows an example of image $X'_i$ 18 obtained through a process of virtual de-staining of input image $Y_i$ 16. Figure 5D shows an example of image $Y''_i$ 20, transformed back from image $X'_i$ 18. This is the image that is used for comparison with the real image $Y_i$ 16. After training, the trained network parameters based on the training applied to the first semantic regression network 11', are prepared for staining new images in the first domain.

It is remarked that networks 11' and 11" for virtual staining are the same networks (they share weights), while networks 13' and 13" for auto-fluorescence estimation are also the same networks (they also share weights). In embodiments of the invention, networks 11' 11" are implemented by means of a semantic regression network 11 for virtual staining, as the one illustrated in Figure 2A, already described. Both networks performing the direct transform (networks 11', 13") and both networks performing the inverse transform (networks 13', 11"), present shared weights. A combined loss function $\mathcal{L}_{s2t}$ defined by the following equation that incorporates the reconstruction similarity for the different transforms is minimized to simultaneously learn the direct and inverse transforms. The inverted cycled network also acts as a regularization term (addend) in the loss function to impose plausible solutions on the transformed domain samples. Regularization is the process of adding information in order to solve an ill-posed problem.

$$\mathcal{L}_{s2t} = \sum_{i=1}^{N} |Y_i - Y'_i| + \sum_{i=1}^{N} |X_i - X''_i| + \sum_{i=1}^{N} |X_i - X'_i| + \sum_{i=1}^{N} |Y_i - Y''_i|$$

By the optimization of the first addend in the former equation, the error between the image in the target domain $Y_i$ 16 and the estimated image $Y'_i$ 12 is minimized. By the optimization of the second addend in the former equation, the error between the image in the source domain $X_i$ 10 and the estimated image $X''_i$ 14 is minimized. By the optimization of the third addend in the former equation, the error between the image in the source domain $X_i$ 10 and the estimated image $X'_i$ 18 is minimized. By the optimization of the fourth addend in the former equation, the error between the image in the target domain $Y_i$ 16 and the estimated image $Y''_i$ 20 is minimized. Thus, the learning capabilities of the semantic regression networks are still more enhanced.

Figure 6A shows a network architecture similar to the one shown in Figure 5A, but used for training a reconstruction module (for example module 925 in Figure 9), such as a module for lissajous reconstruction, of degraded images. The description of Figure 5A generally applies to Figure 6A. However, in Figure 6A, the image in the source domain 310 is a degraded image, such as a lissajous pattern degraded AF image. Degraded image 310 is input into a first semantic regression network 311 in which degraded image 310 is transformed into a lissajous reconstructed image $Y'_i$ 312. Image $Y'_i$ 312 is obtained by applying a lissajous reconstruction process. Image $Y'_i$ 312 is then input into a second semantic regression network 313', in which image $Y'_i$ 312 is transformed back into the original input image $X''_i$ 314 by applying a lissajous degradation estimation process. Simultaneously, a high-quality image 316 is input into a third semantic regression network 313" in which image 316 is transformed into an estimated lissajous pattern degraded image $X'_i$ 318. Image $X'_i$ 318 is obtained by applying a lissajous degradation estimation process. Image $X'_i$ 318 is then input into a fourth semantic regression network 311", in which image $X'_i$ 318 is transformed back into the original input image $Y''_i$ 320 by applying a lissajous pattern reconstruction process. An example of degraded input image $X_i$ 310 has already been shown in Figure 3B. An example of image $Y'_i$ 312 obtained through a process of lissajous reconstruction of input image $X_i$ 310 has already been shown in Figure 3C. The reconstructed image is the output of the Lissajous reconstructor network 311'. An example of image $X''_i$ 314, transformed back from image $Y'_i$ 312 has already been shown in Figure 3D. This image is the output of the Lissajous degradation estimator network 313'. Therefore figures 3B-3D are applicable to Figure 6A. Figure 6B shows an example of image $Y_i$ 316. This is a high-quality image obtained by an autofluorescence microscope. Figure 6C shows an example of image $X'_i$ 18 obtained through a process of virtual degradation of input image $Y_i$ 316. Figure 6D shows an example of image $Y''_i$ 320, transformed back from image $X'_i$ 318. This is the image used for comparison with $Y_i$ 316 in the loss function. After training, trained parameters of the first semantic regression network 311', are prepared for staining new images in the first domain.

So far, different versions of the combined loss function $\mathcal{L}_{s2t}$ only refer to pixel level. This implies that the reconstruction performed by previous networks (Figures 1A, 3A, 5A and 6A) is enforced at the pixel image level with the minimization of the mean absolute error loss function. This means that the network only tries to make the output pixels values look similar to the input pixel values, but it doesn't use any further information -apart from pixel values proximity- to evaluate the network. For example, if the output of a tumoral image forgets about the morphology of the tumour (morphology implies information different from pixel-level information), the loss function doesn't penalize this. However, small changes on the pixel reconstruction can provoke changes on the response of, for example, an optical biopsy classifier or a clinician assessment. To minimize this, an additional term is added to the disclosed loss functions in order to minimize the differences on the reconstruction at image embeddings representation level. Next, an embodiment of the invention is disclosed, in which high-level information of the images is taken into account during the training process of the proposed networks. In particular, feature level information of the images is taken into account. This is schematized in Figure 7A.

In Figure 7A, a classification network 30, such as a Resnet50 classification network or a network that classifies tumors in histology, is trained over a set of images $X_j$ 25. Images are Hematoxilin-Eosin (H-E) histopathological microscopy images. In other words, classification network 30 is trained with a dataset of H-E images for extracting high-level features of the images. The set of images comprises both images of healthy tissues and images of damaged tissues (for example, cancerous tissues). For training the network, pairs of images and their corresponding class (tumour/not tumour) are provided to the network. This training is done by minimizing the categorical cross-entropy loss function which at the same time, improves classification accuracy. This loss function is fed by the output of a last classification layer with softmax activation and the labels in one-hot encoding format. In other words, the last convolutional layer of the network is removed and a global average pooling is performed over the last layer to incorporate all spatial information. The global average pooling layer takes the average value of every feature map obtained in the last convolutional layer and this way a final embedding vector is obtained. The image embeddings that represent the high-level description of the image will be included in the loss function to minimize also the reconstruction differences of the image at feature level that is extracted after the last average pooling. Image embeddings are represented by vector $f_i$. $f_i$ is a vector comprising Q elements, for example Q =2048. Vector $f_i$ is extracted from the real H-E images at the classification network 30. Thus, the differences between the image embeddings from the source images $X_j$ 25 and the reconstructions will be added into the loss function. A β parameter controls the influence of the embedding part in the loss function. Figure 7B is an example of image $X_j$ 25 belonging to a colon training subset of Hematoxilin-Eosin (H-E) histopathological microscopy images.

Next equation adds the image embedding similarity constrain to the cycle network:

$$\mathcal{L}_{s2t} = \sum_{i=1}^{N} |Y_i - Y_i'| + \sum_{i=1}^{N} |X_i - X_i''| + \beta * \left| f_{Y_i} - f_{Y_i'} \right|$$

wherein $f_{Y_i}$ y $f_{Y_i'}$ refer to the embedding vector of the original H-E image and the virtually stained H-E image.

The former loss function is represented in Figure 8, which shows an enhanced architecture 811 for the semantic regression network 11 of Figure 2A (first semantic regression network 11 in Figure 1A). As shown in the block diagram of Figure 8, the loss function 8114 takes into account pixel-level information and high-level description information. The new loss function 8114 has been represented in the semantic regression network 11 of Figure 2A. However, it may also be used, mutatis mutandis, in the remaining regression networks (network 13 in Figure 1A, networks 311, 313 in Figure 3A & 4A). Thus, vectors $f_{Y_i}$ y $f_{Y_i'}$ can be taken into account, adding a new constraint to the loss function. A classification network 8301 8302 (similar to the one shown in Figure 7A) can also be used in all these architectures, as represented in Figure 8. It is remarked that classification networks 8301, 8302 are the same classification network. During training stage, this network calculates the high level description of the image both from the real stained image (network 8302) and from the virtually stained image (network 8301). In a similar way, next equation adds, mutatis mutandis, the image embedding similarity constrain represented in Figure 8, to the symmetric cycle network (networks 11', 13', 13", 11" in Figure 5A, networks 311', 313', 313", 311" in Figure 6A):

$$\mathcal{L}_{s2t} = \sum_{i=1}^{N} |Y_i - Y_i'| + \sum_{i=1}^{N} |X_i - X_i''| + \sum_{i=1}^{N} |X_i - X_i'|$$

$$+ \sum_{i=1}^{N} |Y_i - Y_i''| + \beta * \left| f_{Y_i} - f_{Y_i'} \right| + \beta * \left| f_{Y_i} - f_{Y_i''} \right|$$

So far, it has been explained how to train a virtual staining module using different semantic regression networks.

Once they have been trained, a method of virtually staining a captured image in order to provide the image information in a domain with which clinicians feel comfortable, can be applied, using a module trained with one of the disclosed semantic regression networks. The newly captured image can be reconstructed prior to applying the virtual staining stage, if it is required, using a module trained in a similar way. Reconstruction may be required, for example, when the acquisition means causes degradation. Besides, the visually stained image can be identified / recognized by using classification networks working over H-E images (stained images), in order to provide diagnosis.

It is remarked that the final goal for the learned transformations, as disclosed with reference to Figures 1A-8, is to virtually generate Hematoxylin-Eosin images from a degraded image, such as an auto-fluorescence image, or from an image in a domain with which clinicians are not familiar and/or of which there are no extensive annotated datasets. The objective of this restoration is therefore twofold: (1) Transform the source domain image into an image understandable by the medical community and (2) Be able to use the transformed image to perform an optical biopsy on a target domain with richer and more extensive image datasets.

This is depicted in Figure 9, which shows in block diagram form a method of virtually staining a captured image. The method typically starts with the capture of an image (block 910). Image is capture by an acquisition device. The disclosed method can therefore be implemented in an acquisition device capable of acquiring microscopy images. Such acquisition devices are typically used in in-vivo optical biopsy, ex-vivo optical biopsy and in general in medical diagnostics. Non-limiting examples of acquisition devices may be a confocal device, an auto-fluorescence device, a Multi-Photon Tomography (MPT) device, an Optical Coherence Tomography (OCT) device, a microscopy device or a Raman device. The acquisition device may comprise an optical fiber or optical probe which moves following a predefined pattern. Non-limiting examples of predefined patterns are helix-shaped, lissajous-shaped, or others. So, with the acquisition device an image in a source domain is captured. Non-limiting examples of source domains may be, for example, multi-photon tomography images, such as lissajous scanning probe acquired multi-photon tomography images $D_{s-afp}$ or auto-fluorescence microscopy images $D_{s-afm}$.

In order to perform the disclosed method, the acquisition device may comprise, apart from the conventional components for acquiring images (mechanical, electronic and/or optical components), processing means for receiving images (at least one captured image) and performing the method disclosed with reference to Figure 9. Alternatively, such processing means may be external to the acquisition device. In this case, the acquisition device may be coupled, either wirelessly or in a wired way, to the processing means, which may be, for example, a work station, a computer or a portable device.

Images in certain source domains, such as the multi-photon tomography domain $D_{s-afp}$, may need reconstruction due for instance to the degradation caused during the acquisition process. In this case, a stage of image reconstruction may be applied (block 920). Image reconstruction may comprise a first step of format conversion and normalization (block 921), which results in an acquired image 922. The acquired image 922 - degraded microscopy image- is then fed into a reconstruction module 925, in which the image 922 is reconstructed. Reconstruction module 925 may be implemented using a semantic regression network for image reconstruction, such as a semantic regression network for lissajous reconstruction. As a matter of example, reconstruction module 925 may be implemented with the architecture shown in Figure 4A, the description of which applies, mutatis mutandis, to the reconstruction module 925. A degraded image can be reconstructed from a well-known pattern of the acquisition device, that is to say, from a reconstruction grid pattern or reconstruction grid image. Reconstruction module 925 has been trained with a semantic regression network, as disclosed with reference to Figures 3A, 4A or 6A. In Figure 9, two exemplary reconstruction grid patterns belonging to corresponding training datasets are shown. One of them is a lissajous grid pattern and the other one is a square grid pattern. After reconstruction, reconstruction module 925 provides a reconstructed image 927. As explained, in embodiments of the invention, in which the acquisition device does not substantially degrade the captured image, the image captured by the acquisition device may be an already "reconstructed" image 927, that is to say, an image not requiring further reconstruction. In other words, block 920 is optional.

Image 927, either reconstructed in block 920, or as captured by the acquisition device in block 910, is next fed into a virtual staining module 930, in which the image 927 is transformed into another domain, in particular into a domain familiar to clinicians. This domain into which image 927 is transformed is preferably the Hematoxilin-Eosin (H-E) histopathological microscopy image domain $D_{t-he}$. In other words, the reconstructed image is virtually stained by the virtual staining module or network, resulting in a virtually stained image, such as a hematoxylin-eosin image. Virtual staining module 930 may be implemented using a semantic regression network for virtual staining of an image. As a matter of example, virtual staining module 930 may be implemented with the architecture shown in Figure 2A, the description of which applies, mutatis mutandis, to the virtual staining module 930. Virtual staining module 930 has been trained with a semantic regression network, as disclosed with reference to Figures 1A, 2A, 5A or 7A. As output, the virtual staining module 930 provides a virtually stained image 940. Thanks to the improved training method employed by the virtual staining module (930) -and optionally the reconstruction module 925- the transformed image 940 is such that the diagnosis does not change with respect to a diagnosis made if the image had been directly captured in the second domain.

The virtually stained image 940, which is now in a format with which clinicians are familiar, can directly be used for making a manual (human-made) diagnostic decision (block 970). For example, it can be comprised in a visual HE report (also referred to as virtual histology visual report). In other words, the virtually stained images can serve as visual optical biopsy reports on the already known H-E domain, which can be further studied by clinicians and with which clinicians can validate the algorithm error based on the appearance of already established imaging techniques, such as H-E. This report (block 970) is not based on perceptually plausible reconstructions, but on minimizing the reconstruction error, preferably both on the image domain and in the image embedding domain. This leads to more reliable reconstructions.

Alternatively, or additionally, the virtually stained images 940 may be used for automatic (computer) diagnosis. The virtually stained image can be classified as cancerous or non-cancerous by a classification network or module (block 980) trained over a training set from a H-E dataset, as disclosed with reference to Figure 7A. In this case, the virtual stained image may be fed into an augmentation module (block 960), performing for example test-time augmentation. Test time augmentation (block 960) is preferably performed during prediction to estimate the posterior distribution of the network answer. This is performed by adding noise and altering the input image and integrating this into the mean and the standard deviation of the network predictions. These values serve as estimation on the network confidence on its own estimations. The augmentation module is out of the scope of the present invention.

The virtually stained image 940, either augmented or not, can be fed into a classification module (block 980), in which the image is classified, for example as cancerous or non-cancerous. The classification module is out of the scope of the present invention. Classification network or module (block 980) may be implemented as a residual neural network, wherein the last layer is substituted by a 2-channel convolution with softmax activation. This residual neural network has been trained over a training set from a H-E dataset, as disclosed with reference to Figure 7A, by minimizing a categorical cross-entropy loss function.

It is recalled that the already described semantic regression networks can take into account image embeddings similarities, as disclosed with reference to Figure 7A. This implies that the virtually stained (and optionally reconstructed) image is more robust with respect to a case in which image embeddings similarities are not considered. The virtually stained image 940 can therefore be used to analyse the potential tumor with high accuracy. At the output of the classification module there may be a confidence estimation (block 985).This module 985 automatically augments the image for example by rotating, color balancing, zooming and/or applying several imaging variations to obtain a number of K modified images. Each of the augmented images is predicted by the classification network 980, returning as it is known a 0-1 number per image representing a probability of being cancerous or not. The different outputs are averaged and the final value is used for classification. Finally, a computer diagnostic can be made (block 990) with the accuracy provided by the confidence estimation.

Figure 10 refers to an additional embodiment of the invention. So far, it has been explained, among other things, how to infer higher dimensionality images (for example, H-E images have k=3 channels) from lower dimensionality ones (for example, auto-fluorescence images have k=1 channel). This implies, however, that the transformation network must recover missing information which might involve a not exact reconstruction. In order to cope with this inconvenience, it is proposed to virtual de-stain the higher dimensionality images (for example, H-E images) from the corresponding dataset. In order to do this, they are transformed into images in a first domain (for example, auto-fluorescence images) using the auto-fluorescence estimation network (virtual de-stainer) 1013 disclosed with reference to Figure 1A (network 13). Thus, a classification network or classification module 1030, similar to the classification module (block 980) for classifying H-E images, is used. The classification network for de-staining images is then trained for classification on the first domain (for example, auto-fluorescence domain). Preferably, also test time augmentation is applied in order to map the network self- confidence. The process is shorter than -but similar to- the one disclosed in Figure 9, because there is no need to use the virtual staining network in that process. Once we have an auto-fluorescence image that has been reconstructed, we already have a classifier ready for that image modality. The point here is that in order to train the classifier 1030, the auto-fluorescence estimator network 1013 is used to transform all the HE microscopy images of a dataset into de-stained auto-fluorescence microscopy images. Then, those images are used to train a classifier 1030. This is represented in Figure 10. In turn, the classifier 1030 is also fed with a reconstructed image obtained from a lissajous reconstructor 1311.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A computer-implemented method for transforming an image, comprising:

   applying a format conversion and normalization block (921) to a degraded microscopy image of a first domain (910), thus providing a formatted, normalized degraded image of the first domain (922), wherein the degraded microscopy image of the first domain (910) has been acquired with an acquisition device selected from the following group of acquisition devices: a confocal device, an auto-fluorescence device, a Multi-Photon Tomography device, an Optical Coherence Tomography device, a microscopy device and a Raman device;

applying a reconstruction module (925) to the formatted, normalized degraded image of the first domain (922), thus providing a reconstructed image of the first domain (927), wherein the reconstruction module (925) comprises an encoder implemented with a first semantic regression network and a decoder implemented with a second semantic regression network;

applying a virtual staining module (930) to the reconstructed image of the first domain (927), wherein the reconstructed image of the first domain (927) is transformed into a Hematoxilin-Eosin histopathological image (940), wherein the virtual staining module (930) comprises an encoder implemented with a first semantic regression network and a decoder implemented with a second semantic regression network;

wherein the virtual staining module (930) has been trained with a cycle semantic regression network in which each input image in the source domain (10) belonging to a training dataset is transformed (11, 11') into a Hematoxilin-Eosin histopathological image (12) and each obtained Hematoxilin-Eosin histopathological image (12) is transformed back (13, 13') into an image in the source domain (14), thus enforcing both an inverse transformation between the source domain and the Hematoxilin-Eosin histopathological domain and a direct transformation between the source domain and the Hematoxilin-Eosin histopathological domain.

2. The method of claim 1, wherein the virtual staining module (930) has been additionally trained with an inverted cycle semantic regression network in which simultaneously to the transformation (11, 11') of an input image in the source domain (10) into a Hematoxilin-Eosin histopathological image (12), a Hematoxilin-Eosin histopathological image (16) is transformed (13") into an image in the source domain (18), and simultaneously to the transformation (13, 13') of the Hematoxilin-Eosin histopathological image (12) back into an image in the source domain (14), the image in the source domain (18) is transformed (11") into a Hematoxilin-Eosin histopathological image (20).

3. The method of any one of claims 1-2, wherein the degraded microscopy image (910) is a multi-photon tomography image or an auto-fluorescence microscopy image.

4. The method of any one of claims 1-3, wherein the semantic regression network with which the virtual staining module (930) has been trained, further comprises a classification network (30) trained over a set of Hematoxilin-Eosin histopathological images, the classification network (30) providing a vector ($f_i$) extracted from said Hematoxilin-Eosin histopathological images, said vector ($f_i$) representing image embeddings, such that the difference between image embeddings of original and transformed images is taken into account.

5. The method of any one of claims 1-4, further comprising applying a classification module (980) to the Hematoxilin-Eosin histopathological image (940), wherein the Hematoxilin-Eosin histopathological image is classified as pathogen or non-pathogen, wherein the classification module (980) is implemented with a residual neural network which has been trained over a training set from a hematoxylin-eosin dataset.

6. The method of claim 5, wherein the last layer in the residual neural network has been substituted by a 2-channel convolution with softmax activation.

7. The method of any one of claims 5-6, wherein prior applying the classification module (980), an augmentation module (block 960) performing test-time augmentation is applied to the Hematoxilin-Eosin histopathological image (940).

8. The method of any one of claims 1-7, wherein the reconstruction module (925) has been trained with a cycle semantic regression network in which each input degraded image in the source domain (310) belonging to a training dataset is transformed (311, 311') into a reconstructed image (312) and each obtained reconstructed image (312) is transformed back (313, 313') into a degraded image in the source domain (314), thus enforcing both an inverse transformation between the degraded source domain and the reconstructed domain and a direct transformation between the degraded source domain and the reconstructed domain.

9. The method of claim 8, wherein the reconstruction module (925) has been additionally trained with an inverted cycle semantic regression network in which simultaneously to the transformation (311, 311') of an input degraded image (310) into a reconstructed image (312), a reconstructed image (316) is transformed (313") into a degraded image (318), and simultaneously to the transformation (313, 313') of the reconstructed image (312) back into a degraded image in the source domain (314), the degraded image (318) is transformed (311") into a reconstructed image (320).

10. A device comprising processing means configured for receiving a degraded microscopy image of a first domain (910) and performing the method according to any one claims 1-9.

11. A system comprising an acquisition device and the device of claim 10, wherein the acquisition device is one of the following group: a confocal device, an auto-fluorescence device, a Multi-Photon Tomography device, an Optical Coherence Tomography device, a microscopy device and a Raman device.

12. An acquisition device comprising the device of claim 10, wherein the acquisition device is one of the following group: a confocal device, an auto-fluorescence device, a Multi-Photon Tomography device, an Optical Coherence Tomography device, a microscopy device and a Raman device.

13. A computer program product comprising computer program instructions/code for performing the method according to any one of claims 1-9.

14. A computer-readable memory/medium that stores program instructions/code for performing the method according to any one of claims 1-9.

**FIG. 1A**

**FIG. 1B**    **FIG. 1C**    **FIG. 1D**    **FIG. 1E**

**FIG. 2A**

**FIG. 2B**

FIG. 3A

FIG. 3B

FIG. 3C

FIG. 3D

311

3111    114    3113    312

310    3112    316    3114

$Y_i$

# FIG. 4A

# FIG. 4B

**FIG. 5A**

**FIG. 5B**  **FIG. 5C**  **FIG. 5D**

310　　　311'　　　312　　　313'　　　314

$X_i$　　　$Y'_i$　　　$X''_i$

$Y_i$　　　$X'_i$　　　$Y''_i$

316　　　313"　　　318　　　311"　　　320

## FIG. 6A

**FIG. 6B**　　　**FIG. 6C**　　　**FIG. 6D**

**FIG. 7A**

**FIG. 7B**

FIG. 8

**FIG. 9**

**1013**

**1311**

**1030**

Train

Tumour
No-tumour

# FIG. 10

**EUROPEAN SEARCH REPORT**

Application Number

EP 19 38 3170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAIR RIVENSON ET AL: "Deep learning-based virtual histology staining using auto-fluorescence of label-free tissue", ARXIV.ORG, CORNELL UNIVERSITY LIBRARY, 201 OLIN LIBRARY CORNELL UNIVERSITY ITHACA, NY 14853, 30 March 2018 (2018-03-30), XP081136022, DOI: 10.1038/S41551-019-0362-Y * abstract; figure 1 * * page 1, line 1 - page 11, line 10 * | 1-14 | INV. G06T7/00 G06T5/00 |
| X | ZHAOYANG XU ET AL: "GAN-based Virtual Re-Staining: A Promising Solution for Whole Slide Image Analysis", ARXIV.ORG, CORNELL UNIVERSITY LIBRARY, 201 OLIN LIBRARY CORNELL UNIVERSITY ITHACA, NY 14853, 13 January 2019 (2019-01-13), XP081004944, * abstract; figure 3 * * pages 5-8: section 2 * * pages 12-13: section 5 * | 1-14 | |
| A | US 2019/188446 A1 (WU CHENG-HSUN [US] ET AL) 20 June 2019 (2019-06-20) * abstract; figures 1,2 * * paragraph [0005] - paragraph [0009] * * paragraph [0025] - paragraph [0038] * | 1-10 | TECHNICAL FIELDS SEARCHED (IPC)  G06T |
| A | WO 2019/191697 A1 (UNIV CALIFORNIA [US]) 3 October 2019 (2019-10-03) * abstract; figures 2, 8-10 * * paragraph [0006] - paragraph [0013] * * paragraph [0061] - paragraph [0087] * | 1-10 | |

-/--

The present search report has been drawn up for all claims

| Place of search | Date of completion of the search | Examiner |
|---|---|---|
| Munich | 5 June 2020 | Herter, Jochen |

EPO FORM 1503 03.82 (P04C01)

Europäisches
Patentamt
European
Patent Office
Office européen
des brevets

**EUROPEAN SEARCH REPORT**

Application Number

EP 19 38 3170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/060141 A1 (SIEMENS HEALTHCARE DIAGNOSTICS INC [US]) 28 March 2019 (2019-03-28) * abstract; figures 4A,4B * * paragraph [0023] - paragraph [0040] * ----- | 1-14 | |
| A | NESLIHAN BAYRAMOGLU ET AL: "Towards Virtual H&E Staining of Hyperspectral Lung Histology Images Using Conditional Generative Adversarial Networks", 2017 IEEE INTERNATIONAL CONFERENCE ON COMPUTER VISION WORKSHOPS (ICCVW), 22 October 2017 (2017-10-22), pages 64-71, XP055497287, Venice, IT DOI: 10.1109/ICCVW.2017.15 ISBN: 978-1-5386-1034-3 * the whole document * ----- | 1-14 | |

TECHNICAL FIELDS
SEARCHED        (IPC)

The present search report has been drawn up for all claims

| Place of search | Date of completion of the search | Examiner |
|---|---|---|
| Munich | 5 June 2020 | Herter, Jochen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 19 38 3170

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2020

| Patent document cited in search report | Publication date | Patent family member(s) | Publication date |
|---|---|---|---|
| US 2019188446 A1 | 20-06-2019 | US 2019188446 A1<br>WO 2019118544 A1 | 20-06-2019<br>20-06-2019 |
| WO 2019191697 A1 | 03-10-2019 | NONE | |
| WO 2019060141 A1 | 28-03-2019 | CN 111095360 A<br>WO 2019060141 A1 | 01-05-2020<br>28-03-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9589374 B1

### Non-patent literature cited in the description

- **GEERT LITJENS et al.** A survey on deep learning in medical image analysis. *Medical image analysis,* vol. 42, 60-88
- **ALFONSO MEDELA ; ARTZAI PICÓN.** *Constellation loss: Improving the efficiency of deep metric learning loss functions for optical embedding,* 2019
- **DEEPAK PATHAK.** Context encoders: Feature learning by inpainting. *Proceedings of the IEEE conference on computer vision and pattern recognition,* 2016, 2536-2544
- Colorful image colorization. **RICHARD ZHANG.** European conference on computer vision. Springer, 2016, 649-666
- **PHILIP ISOLA.** Image-to-image translation with conditional adversarial networks. *Proceedings of the IEEE conference on computer vision and pattern recognition,* 2017, 1125-1134
- **YOCHAI BLAU.** The perception-distortion tradeoff. *Proceedings of the IEEE Conference on Computer Vision and Pattern Recognition,* 2018, 6228-6237
- **JUN-YAN XHU.** Unpaired image-to-image translation with conditional adversarial networks. *Proceedings of the IEEE international conference on Computer Vision,* 2017, 2223-2232